Europäisches Patentamt

European Patent Office

Office européen des brevets

(11) Veröffentlichungsnummer : **0 356 605 B1**

(12) **EUROPÄISCHE PATENTSCHRIFT**

(19)

(45) Veröffentlichungstag der Patentschrift :
**02.01.92 Patentblatt 92/01**

(21) Anmeldenummer : **88890219.4**

(22) Anmeldetag : **31.08.88**

(51) Int. Cl.⁵ : **C02F 1/62,** B01D 21/00,
C22B 3/00, C02F 1/52

(54) **Metallausfällungs- und Neutralisationsanlage für mehrere Metalle enthaltende Metallbeizen.**

(43) Veröffentlichungstag der Anmeldung :
**07.03.90 Patentblatt 90/10**

(45) Bekanntmachung des Hinweises auf die
Patenterteilung :
**02.01.92 Patentblatt 92/01**

(84) Benannte Vertragsstaaten :
**BE CH DE ES FR GB GR IT LI LU NL SE**

(56) Entgegenhaltungen :
**US-A- 4 006 215
US-A- 4 652 381
PATENT ABSTRACTS OF JAPAN, Band 12, Nr.
5 (C-467)[2852], 8. Januar 1988, Seite 101 C
467; & JP-A-62 163 713 (WASEDA GIKEN K.K.)
20.07.1987**

(73) Patentinhaber : **KÖRNER
CHEMIEANLAGENBAU GESELLSCHAFT
M.B.H.
Nr. 70
A-8551 Wies (AT)**

(72) Erfinder : **Körner, Hans
A-8551 Wies Nr. 70 (AT)**
Erfinder : **Wurm, Franz, Mag.
Am Blumenhang 7/3
A-8010 Graz (AT)**

(74) Vertreter : **Piso, Eberhard, Dr.
Patentanwälte Dipl.-Ing. Herbert C.E. Krause
Dr. Eberhard Piso Gluckgasse 1 Postfach 328
A-1015 Wien 1 (AT)**

EP 0 356 605 B1

## Beschreibung

Die Erfindung betrifft eine Metallausfällungs- und Neutralisationsanlage für mehrere Metalle enthaltende Metallbeizen, wobei sämtliche für die Metallausfällung und Neutralisation erforderlichen Einrichtungen in einem kompakten Behälter frostsicher, säure- und laugenfest ausgeführt, angeordnet sind.

Die AT-A-384601 zeigt eine Neutralisationsanlage für Säuren und Laugen, die als geschlossene Einheit in Form eines chemikalienfesten Kunststoffsilos ausgebildet ist. Sämtliche für eine vollständige Neutralisation notwendigen Einrichtungen sind in diesem Kunststoffsilo untergebracht.

Bei der Neutralisation von Metallbeizen mit gelösten Metallen müssen diese Metalle ausgefällt werden, um den maximal zulässigen Metallgehalt im Abwasser nicht zu überschreiten. Herkömmlicherweise wird dies für je ein bestimmtes Metall in einem einzelnen Absetzbecken durchgeführt. Soll beispielsweise eine Beizlösung, in welcher verschiedene Metalle gelöst sind, neutralisiert werden, so muß dieser Vorgang, vor allem bei entsprechend großen Durchsatzmengen, mit Hilfe mehrerer Absetzbecken durchgeführt werden, was in jedem Fall einen zeitaufwendigen Vorgang bedeutet, da jeweils nach dem Ausfällen bei entsprechendem pH-Wert die Beize aus dem abgesetzten Becken in ein anderes Becken geflutet werden und der Vorgang der Metallausfällung bei verändertem pH-Wert wieder neu angesetzt werden muß. Diese Absetzbecken wiederum müssen in einem Gebäude unterbracht sein, um die Anlage vor Frost zu schützen, wodurch zusätzlich zum zeitlichen Aufwand auch noch ein erheblicher räumlicher sowie finanzieller Aufwand notwendig ist.

Aufgabe der Erfindung ist es, die oben genannten Nachteile zu vermeiden und die in Metallbeizen vorkommenden unterschiedlichen gelösten Metalle auf platz- und zeitsparendem Weg zu entfernen.

Die Erfindung löst diese Aufgabe dadurch, daß eine Vielzahl von Ausfällstufen, vorzugsweise Schrägklärer, dicht hintereinander angeordnet sind, daß jeder Ausfällstufe eine gesonderte pH-Meßstelle zur individuellen Einstellung des pH-Wertes zugeordnet ist, wodurch ein einziger Durchlauf der Metallbeize durch die Reihe der Ausfällstufen zum Ausfällen der unterschiedlichen im Beizmedium gelösten Metallsalze genügt und sich ein jedes der Metallsalze in einer eigenen Ausfällstufe absetzt, daß beiderseits der Ausfällstufen Behälter zum Sammeln der Metallbeize und am Ende der Reihe der Ausfällstufen eine Filterpresse angeordnet sind und daß die Anlage einen Neutralisationsteil zum Neutralisieren der verbleibenden Metallbeizen umfaßt.

Die Erfindung wird im folgenden an Hand eines Ausführungsbeispiels unter Zuhilfenahme der angeschlossenen Zeichnung näher beschrieben.

Es zeigen Fig. 1 die erfindungsgemäße Anlage in einem Längsschnitt, Fig. 2 die erfindungsgemäße Anlage in einem Querschnitt und Fig. 3 die erfindungsgemäße Anlage in einer Draufsicht im Schnitt.

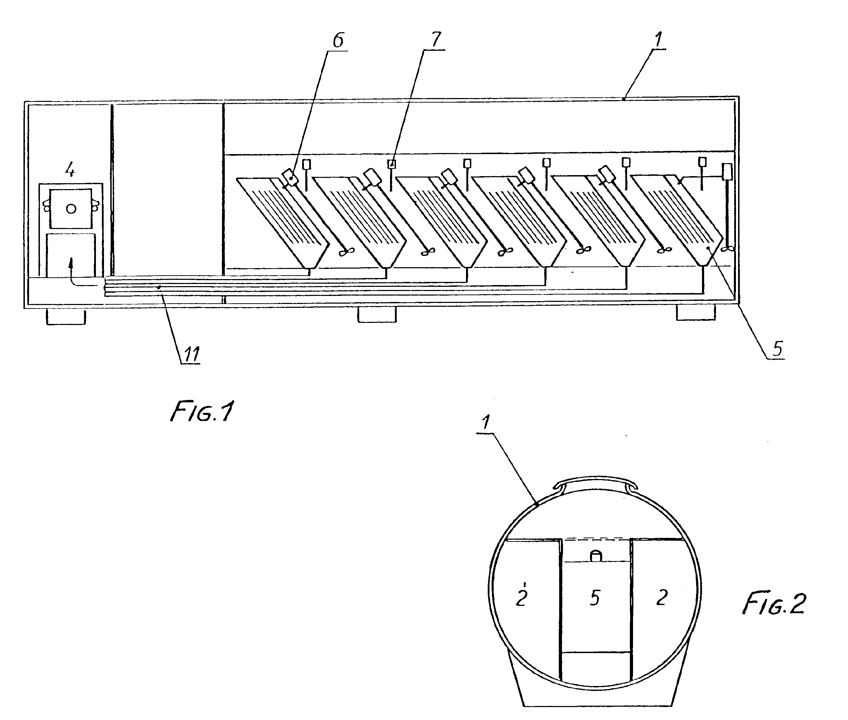

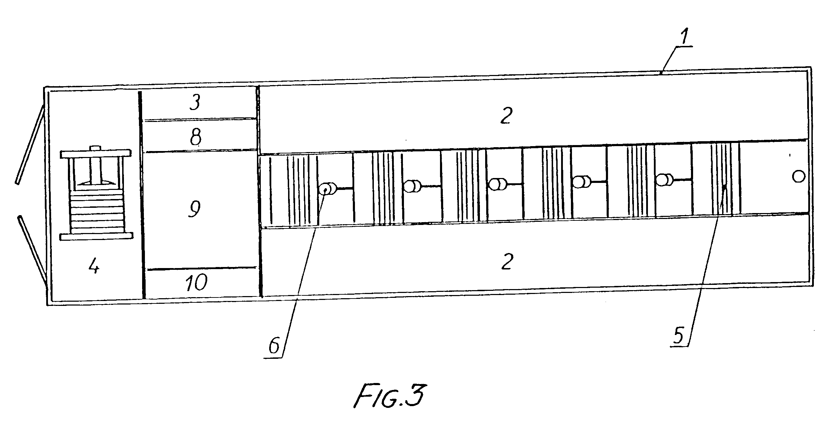

Der Behälter (1) umfaßt einen Altsäure-Sammelbehälter (2), welcher beiderseits einer Reihe hintereinander angeordneter Schrägklärer (5) angeordnet ist. Anstelle der Schrägklärer können als hintereinandergeschaltete Ausfällstufen auch Absetzbecken verwendet werden. Jeder Schrägklärer (5) ist mit einer Umwälz- und Förderpumpe (6) für die Metallbeize, sowie mit einer angeschlossenen pH-Meßstelle (7) versehen.

Wird zum Beispiel in einer Metallbeize im Beizmedium

1.  Eisen
2.  Chrom
3.  Blei
4.  Zink
5.  Nickel
6.  Cadmium

festgestellt, so wird die platzsparende Metallausfällungs- und Neutralisationsanlage sechsstufig mit Ausfällungs-Schrägklärern, oder bei geringen Ausfällungen auch mit Absetzbecken ausgestattet. Vorzugsweise werden diese in einer Reihe hintereinander so angeordnet, daß die Ausfällung nach steigenden oder fallenden pH-Werten erfolgt.

Im Beispielsfall würde die Anordnung derart erfolgen, daß die Absetzbecken oder Schrägklärer 1 bis 6

1.  einen pH-Wert von 2,8 für Eisen
2.  einen pH-Wert von 5,9 für Chrom
3.  einen pH-Wert von 6,6 für Blei
4.  einen pH-Wert von 7,6 für Zink
5.  einen pH-Wert von 7,8 für Nickel
6.  einen pH-Wert von 9,2 für Cadmium

aufweisen, d.h., daß in diesem Falle eine steigende pH-Einstellung zweckmäßig ist.

Die fallende und wechselnde pH-Einstellung wird je nach Betriebsbedingungen vorgenommen.

Die ausgefällten Metalle werden über Leitungen (11) zur Filterpresse (4) geführt, wo sie deponiert und zu Filterkuchen verarbeitet werden können.

Das die einzelnen Metallausfällungsstufen durchwandernde Beizmedium wird zum Schluß des Prozesses zur notwendigen Neutralisation in den an die Metallausfällungsstufen anschließenden Neutralisationsteil (9) geführt. In diesem Bereich der Anlage ist auch ein Behälter (8) für die notwendigen Neutralisationsmittel sowie eine Abwasser-Endkontrolle (10) angeordnet. Die Bedienung der Anlage erfolgt über einen Schalt- und Steuerschrank. Durch die oben beschriebene und in der Zeichnung dargestellte Anlage ist eine platz- und zeitsparende Metallausfällung sowie Neutralisation von Metallbeizen gewährleistet.

**Patentansprüche**

1. Metallausfällungs- und Neutralisationsanlage
für mehrere Metalle enthaltende Metallbeizen, wobei
sämtliche für die Metallausfällung und Neutralisation
erforderlichen Einrichtungen in einem kompakten
Behälter frostsicher, säure- und laugenfest ausgeführt, angeordnet sind, dadurch gekennzeichnet, daß
eine Vielzahl von Ausfällstufen (5), vorzugsweise
Schrägklärer, dicht hintereinander angeordnet sind,
daß jeder Ausfällstufe eine gesonderte pH-Meßstelle
(7) zur individuellen Einstellung des pH-Wertes zugeordnet ist, wodurch ein einziger Durchlauf der Metallbeize durch die Reihe der Ausfällstufen zum
Ausfällen der unterschiedlichen im Beizmedium gelösten Metallsalze genügt und sich ein jedes der Metallsalze in einer eigenen Ausfällstufe absetzt, daß
beiderseits der Ausfällstufen Behälter (2) zum Sammeln der Metallbeize und am Ende der Reihe der Ausfällstufen eine Filterpresse (4) angeordnet sind und
daß die Anlage einen Neutralisationsteil (9) zum Neutralisieren der verbleidenden Metallbeizen umfaßt.

**Revendications**

1. Installation de précipitation de métaux et de
neutralisation pour des décapants métalliques renfermant plusieurs métaux, tous les dispositifs, nécessaires à la précipitation de métaux et à la neutralisation,
étant logés dans une cuve compacte en étant réalisés
protégés du gel, et résistants aux acides et aux lessives, caractérisée par le fait qu'un grand nombre d'étages de précipitation (5), de préférence des
décanteurs inclinés, est agencé en succession
mutuelle ramassée ; par le fait qu'une zone distincte
(7) de mesurage du pH est associée à chaque étage
de précipitation, en vue de l'ajustement individuel de
la valeur-pH, de sorte qu'un passage unique du décapant métallique, à travers la rangée des étages de
précipitation, suffit pour la précipitation des différents
sels métalliques dissous dans l'agent décapant, et
que chacun des sels métalliques se dépose dans un
propre étage de précipitation ; par le fait que des
réceptacles (2) sont disposés de part et d'autre des
étages de précipitation, en vue de recueillir le décapant métallique, un filtre-presse (4) étant disposé à
l'extrémité de la rangée des étages de précipitation ;
et par le fait que l'installation renferme une partie de
neutralisation (9) pour neutraliser les décapants
métalliques résiduels.

**Claims**

1. Metal precipitation and neutralisation plant for
metal mordants containing several metals, wherein all
of the apparatus necessary for metal precipitation and
neutralisation are provided in a compact container
secure against frost and resistant to acid and alkali,
characterised in that a plurality of precipitation stages
(5), preferably inclined clarifiers, are arranged closely
one behind another, that each precipitation stage is
provided with a respective pH measuring position (7)
for the individual adjustement of the pH value,
whereby a single passage of the metal mordant
through the series of precipitation stages suffices to
precipitate the differing metal salts dissolved in the
mordant medium and one each of the metal salts
deposits in its own precipitation stage, and on both
sides of the precipitation stages are arranged containers (2) to collect the metal mordant and at the end of
the series of the precipitation stages, a filter press (4)
is arranged and that the plant comprises a neutralisation part (9) to neutralise the remaining metal mordant.

Fig.1

Fig.2

FIG.3

EP 0 356 605 B1